Europäisches Patentamt

European Patent Office

Office européen des brevets

(19)

(11) Veröffentlichungsnummer: **0 324 911 B1**

(12) **EUROPÄISCHE PATENTSCHRIFT**

(45) Veröffentlichungstag der Patentschrift: **19.02.92**

(51) Int. Cl.⁵: **B61H 5/00**, B61H 15/00, F16D 65/56

(21) Anmeldenummer: **88118689.4**

(22) Anmeldetag: **10.11.88**

(54) **Bremseinheit für Scheibenbremsen von Schienenfahrzeugen.**

(30) Priorität: **18.01.88 DE 3801253**

(43) Veröffentlichungstag der Anmeldung: **26.07.89 Patentblatt 89/30**

(45) Bekanntmachung des Hinweises auf die Patenterteilung: **19.02.92 Patentblatt 92/08**

(84) Benannte Vertragsstaaten: **DE FR SE**

(56) Entgegenhaltungen:
**EP-A- 0 132 600**
**DE-A- 1 625 755**
**DE-A- 1 755 823**
**US-A- 3 964 579**

(73) Patentinhaber: **KNORR-BREMSE AG**
**Moosacher Strasse 80 Postfach 401060**
**W-8000 München 40(DE)**

(72) Erfinder: **Staltmeir,Josef**
**Knorrstrasse 83**
**W-8000 München 40(DE)**
Erfinder: **Wosegien, Bernd**
**Angerweg 8**
**W-8000 München 83(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 324 911 B1

## Beschreibung

Die Erfindung betrifft eine Bremseinheit für Scheibenbremsen von Schienenfahrzeugen, mit einem an einem Rahmenteil des Schienenfahrzeuges befestigbaren Tragteil, welches mit einem Bremszylinder kombiniert ist, dessen Achse in der Ebene der abzubremsenden Bremsscheiben verläuft und dessen Kolbenstange ein beidseitig mit Keilflächen versehenes Keilstück trägt, mit einer Bremszange, welche zwei Bremshebel aufweist, die an ihrem einen Ende je eine an die Bremsscheibe anpreßbare Bremsbacke tragen, zwischen deren andere Enden das Keilstück eingreift, wobei an jeder Keilfläche eine in Spreizrichtung der Bremshebelenden mit einem dieser Bremshebelenden zusammenwirkende Rolle abrollbar ist, und und mit einer die Bremshebel etwa mittig verbindenden Zugstange, welche in ihrer parallel zur Achsrichtung der Bremsscheibe verlaufenden Längsrichtung verschieblich im Tragteil gelagert ist, welche zwei durch eine selbsthemmende Schraubverbindung zumindest in Zugrichtung gegeneinander abgestützte Lagerteile umfaßt, deren jedes ein zwischen die beiden Wangen eines der doppelwangig ausgebildeten Bremshebel eingreifenes Lagerauge aufweist, das um eine zur Ebene der Bremsscheibe parallele Drehachse drehbar am jeweiligen Bremshebel gelagert ist, und mit einer hubabhängig vom Bremszylinder betätigbaren Betätigungsvorrichtung für die Schraubverbindung, umfassend eine mit einem einem Sollhub des Keilstückes entsprechenden Leerhub versehene Anschlagvorrichtung zwischen einem entsprechend der Hubbewegung des Keilstückes beweglichen Teil und einer Hebelanordnung, die über eine gegebenenfalls als Ratschengetriebe ausgebildete Einwegdrehkupplung mit einem drehbaren Teil der Schraubverbindung gekoppelt ist, wobei die Einwegdrehkupplung eine Ruhestellung aufweist, aus welcher sie durch die Hebelanordnung entgegen der Kraft einer Feder in Entsperrdrehrichtung drehbar ist.

Eine derartige Bremseinheit ist aus der DE-A-27 27 473 bekannt. Der Bremszylinder ist hierbei mit zu den Bremshebeln paralleler Achsrichtung zwischen den beiden Bremshebeln angeordnet, wodurch sich eine relativ große Baulänge für die Bremseinheit ergibt. Die keilstückseitigen Enden der Bremshebel tragen unmittelbar auf den Keilflächen des Keilstückes abrollbare Rollen, wodurch keine reinen Spreizkräfte, sondern auch Zugkraftkomponenten in die Bremshebel eingeleitet werden, welche durch die Bremshebellagerung und damit letztlich durch eine Biegebeanspruchung der Zugstange aufgenommen werden müssen. Die Zugstange ist als Spannschloß ausgebildet, welches durch das Ratschengetriebe verschraubbar ist. Zur Handverstellung der Länge der Zugstange ist die Sperrklinke des Ratschengetriebes von Hand aushebbar und ein Teil des Spannschlosses willkürlich drehbar ausgebildet. Die beiden Bremshebel weisen seitens ihrer Rollen hakenartige Verlängerungen auf, in welche eine Gestängerückzugfeder eingehängt ist. Das Tragteil ist gehäuseartig ausgebildet, es ragen lediglich die vorderen Enden der Bremshebel mit den Bremsbacken aus ihm heraus; mittels Schraubbolzen ist es an ein Rahmenteil des Schienenfahrzeuges anflanschbar.

Aus der EP-A 132 600 ist es bekannt, den Bremszylinder mit zur Längsrichtung der Bremszangenhebel etwa rechtwinklig verlaufender Achsrichtung anzuordnen und erforderlichenfalls mit einem Federspeicherteil zu versehen. Weiterhin zeigt diese Druckschrift ein konsolenartiges Tragteil, an dessen bremsscheibenseitigem Ende Lagerstellen für im wesentlichen abwärts verlaufende und andererseits an den Bremsbacken angelenkte Pendelhebel vorgesehen sind.

Es ist des weiteren bereits bekannt, die Kolbenstange von Bremszylindern mit einer koaxialen Bohrung zu versehen, in welche ein an einem Gehäuseteil starr gehaltener Führungsbolzen verschieblich eingreift.

Es ist Aufgabe der Erfindung, eine Bremseinheit der eingangs genannten Art derart auszubilden, daß sie einen sehr kompakten, raumsparenden Aufbau aufweist, aus einfachen, robusten Bauteilen besteht und somit billig ist, an ihren Bauteilen nur geringen Verschleiß aufweist und somit lange wartungsfreie Betriebszeiten ermöglicht und welche die Möglichkeit bietet, bei Bedarf den jeweils vorliegenden Bedingungen angepaßt werden zu können.

Diese Aufgabe wird nach der Erfindung gelöst durch die Kombination der zum Teil an sich bekannten Merkmale, daß

- die Richtung der Achse des Bremszylinders etwa rechtwinklig zur Längsrichtung der Bremshebel verläuft;
- die Rollen an je einem von beidseitig des Keilstückes angeordneten Druckstößeln drehbar gelagert sind, wobei die Druckstößel unverdrehbar und parallel zur Achse der Bremsscheibe verschieblich im Tragteil gelagert sind und über endseitige Druckflächen an den Bremshebelenden anliegen;
- die Lagerteile einander zugewandt in Längsrichtung der Zugstange verlaufende Hülsenabschnitte aufweisen, die längsverschieblich in einer Querbohrung des Tragteiles gelagert sind;
- die eine Gewindehülse und eine mit dieser verschraubte Gewindespindel aufweisende Schraubverbindung die Hülsenabschnitte durchgreift, wobei jeweils zumindest in Zugrichtung der Zugstange wirksam die Gewindehülse am einen und die Gewindespindel am anderen Lagerteil abgestützt ist, wenigstens eine dieser Abstützungen drehbar ausgebildet und das so drehbare Teil - Gewindehülse oder Gewindespindel - mit der Einwegdrehkupplung gekoppelt ist.

Die Unteransprüche zeigen nach der weiteren Erfindung vorteilhafte Ausbildungsmöglichkeiten einer derartigen Bremseinheit auf.

Für Keilspreizbetätigungen von Trommelbremsen ist es bekannt, ein von einem Bremszylinder verschiebliches Keilstück vorzusehen, an dessen beidseitigen Keilflächen Rollen abrollbar sind. Die Rollen sind an je einem von zwei beidseitig des Keilstückes angeordneten, längsverschieblichen Druckstößeln drehbar gelagert, weisen zumeist eine als Schraubverbindung ausgebildete Nachstellvorrichtung auf und liegen mit ihren endseitigen Druckflächen an den auseinanderzuspreizenden Enden der Bremsbacken der Trommelbremse an.

In der Zeichnung sind Ausführungsbeispiele für nach der Erfindung ausgebildete Bremseinheiten dargestellt, und zwar zeigt

Figur 1    ein erstes Ausführungsbeispiel in perspektivischer Ansicht,

Figur 2    einen Horizontalschnitt durch die Bremseinheit,

Figur 3    einen in der Ebene der Bremsscheibe liegenden Längsschnitt durch die Bremseinheit,

Figur 4    einen senkrecht zur Ebene der Bremsscheibe liegenden Axialschnitt durch den Bremszylinder,

Figur 5    in vergrößertem Maßstab als Einzelheit den Dreharm mit dem Ratschengetriebe in Aufsicht und im Schnitt,

Figur 6    als Einzelheit das Tragteil in verkleinertem Maßstab,

Fig.7 u.8    in schematischer Darstellung der Figur 3 entsprechende Schnittbilder durch abgeänderte Ausführungsbeispiele der Bremseinheit und

Figur 9    ein abgewandeltes Ausführungsbeispiel der Bremseinheit in perspektivischer Darstellung.

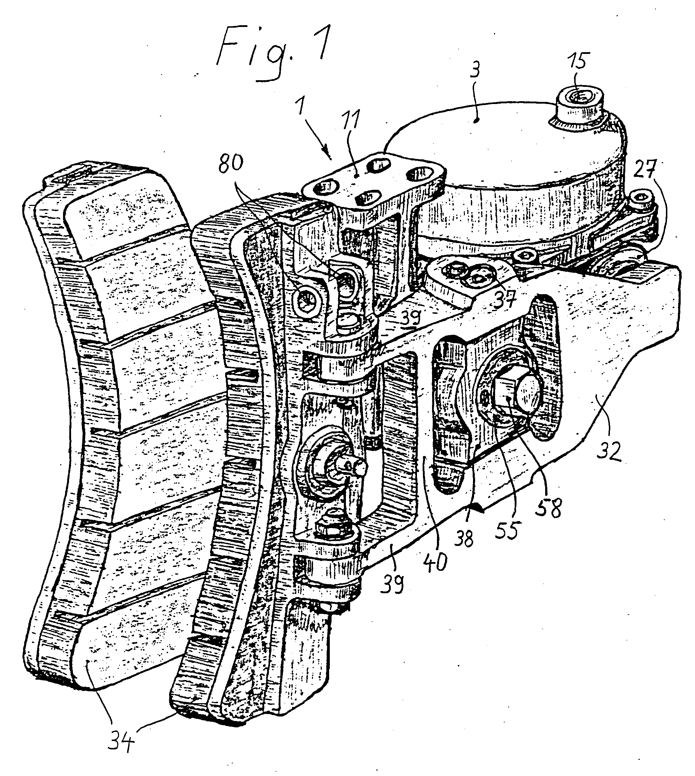

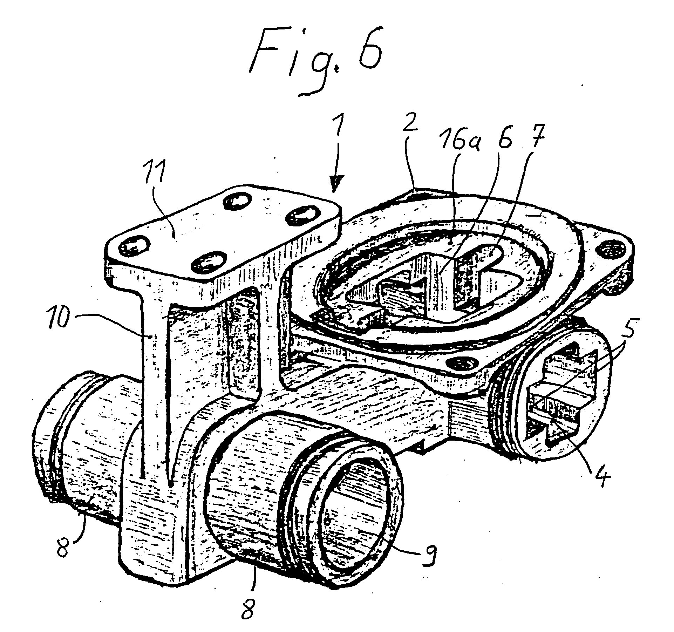

Die Bremseinheit weist gemäß Figur 1 und 6 ein Tragteil 1 auf, das vorzugsweise als Gußteil gefertigt ist. Gemäß Figur 6 ist das Tragteil 1 nahe seines einen Endes mit einem Flanschabschnitt 2 zum Anflanschen eines aus Figur 1 ersichtlichen Bremszylinders 3 und mit rechtwinkliger Achsrichtung hierzu mit Öffnungen 4 versehen, welche längsnutenartige Ausnehmungen 5 aufweisen. In den Flanschabschnitt 2 mündet eine Ausnehmung 6 ein, welche auf gegenüberliegenden Seiten mit Haltenuten 7 versehen ist. Nahe seines anderen Endes ist das Tragteil 1 beidseitig mit je einem buchsenartigen Ansatz 8 versehen und innerhalb der Ansätze 8 von einer Querbohrung 9 durchdrungen. An seinem der Querbohrung 9 zugewandten Ende ist das Tragteil 1 mit einem im Querschnitt etwa kreuzförmigen Ansatz 10 versehen, welcher etwa rechtwinklig zu einer durch die zueinander parallelen Achsen der Öffnung 4 und der Querbohrung 9 gelegten Ebene auskragt und mit einem Flanschabschnitt 11 endet; mittels des Flanschabschnittes 11 ist das Tragteil 1 an einem nicht dargestellten Rahmenteil eines Schienenfahrzeuges starr anflanschbar.

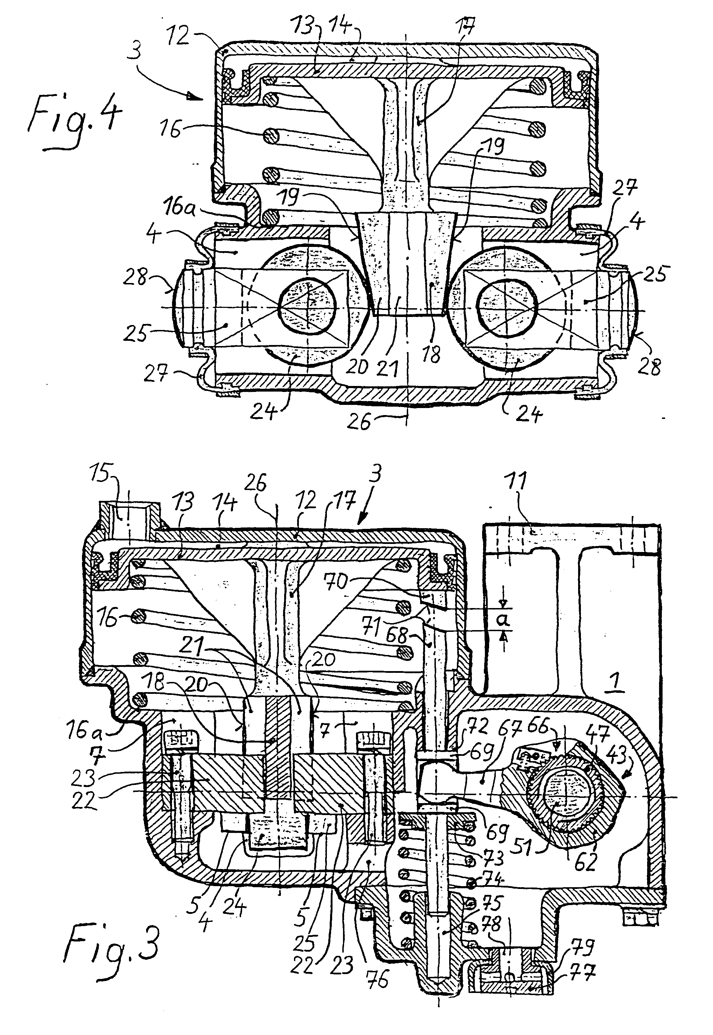

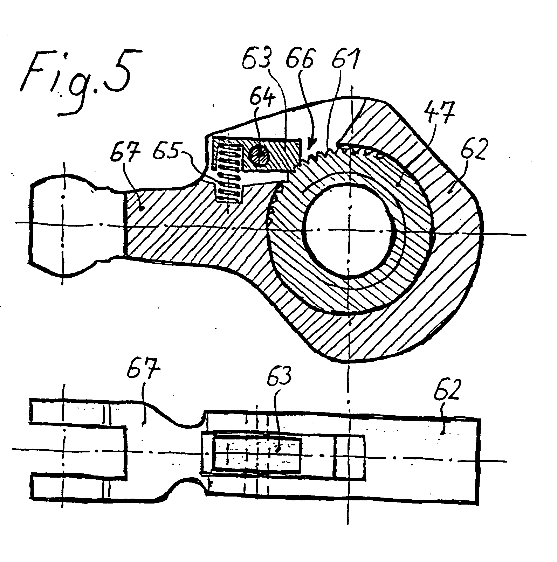

Gemäß Figur 3 und 4 weist der Bremszylinder 3 einen an den Flanschabschnitt 2 angeflanschten Zylinderkörper 12 auf, in welchem ein Kolben 13 abgedichtet verschieblich gelagert ist. Einerseits des Kolbens 13 befindet sich ein Beaufschlagungsraum 14, der durch einen Rohranschluß 15 mit Druckluft beaufschlagbar ist. Andererseits ist der Kolben 13 von einer Druckfeder 16 belastet, die sich gegen einen Ringflansch 16a innerhalb des Flanschabschnittes 2 des Tragteiles 1 abstützt. Der Kolben 13 ist seitens der Druckfeder 16 mit einer Kolbenstange 17 versehen, die an ihrem Ende ein Keilstück 18 trägt. Das Keilstück 18 weist auf zwei einander gegenüberliegenden Seiten je eine Keilfläche 19 auf, die beiden Keilflächen 19 divergieren in Richtung zum Kolben 13. An seinen zwischen den beiden Keilflächen 19 liegenden Seitenflächen 20 ist das Keilstück 18 mit je einer Längsnut 21 versehen. Das längsbeweglich in die Ausnehmung 6 des Tragteiles 1 eingreifende Keilstück 18 ist durch Führungsfedern 21 längsverschieblich und undrehbar geführt; die Führungsfedern 22 greifen, wie aus Figur 3 ersichtlich, sowohl in die Haltenuten 7 wie in die Längsnuten 21 ein, sie sind in den Haltenuten 7 durch in das Tragteil 1 eingreifende Schrauben 23 befestigt, in die Längsnuten 21 greifen sie dagegen verschieblich ein.

Seitlich des Keilstückes 18 befinden sich an dessen Keilflächen 19 abrollbar anliegende Rollen 24. Jede der beiden Rollen 24 ist im gegabelten Ende eines Druckstößels 25 um ihre Achse drehbar gelagert; die beiden Druckstößel 25 sind zueinander gleichachsig und rechtwinklig zur Achse 26 des Bremszylinders 3 verschieblich im Tragteil 1 gelagert. Die Druckstößel 25 weisen rechteckigen Querschnitt auf und greifen zu ihrer undrehbaren Führung in die Ausnehmungen 5 des Tragteiles 1 ein. Mit ihren einander abgewandten Enden stehen die Druckstößel 25 geringfügig aus den Öffnungen 4 des Tragteiles 1 vor, die Mündungen der Öffnungen 4 sind durch Faltenbälge 27 abgedeckt, welche sich vom Tragteil 1 zu diesen äußeren Enden der Druckstößel 25 erstrecken. Die einander abgewandten Stirnflächen der Druckstößel 25 sind zu balligen Druckflächen 28 ausgebildet. Zur vereinfachten Darstellung sind in Figur 3 und 4 die Bremshebel mitsamt den Bremsbacken weggelassen.

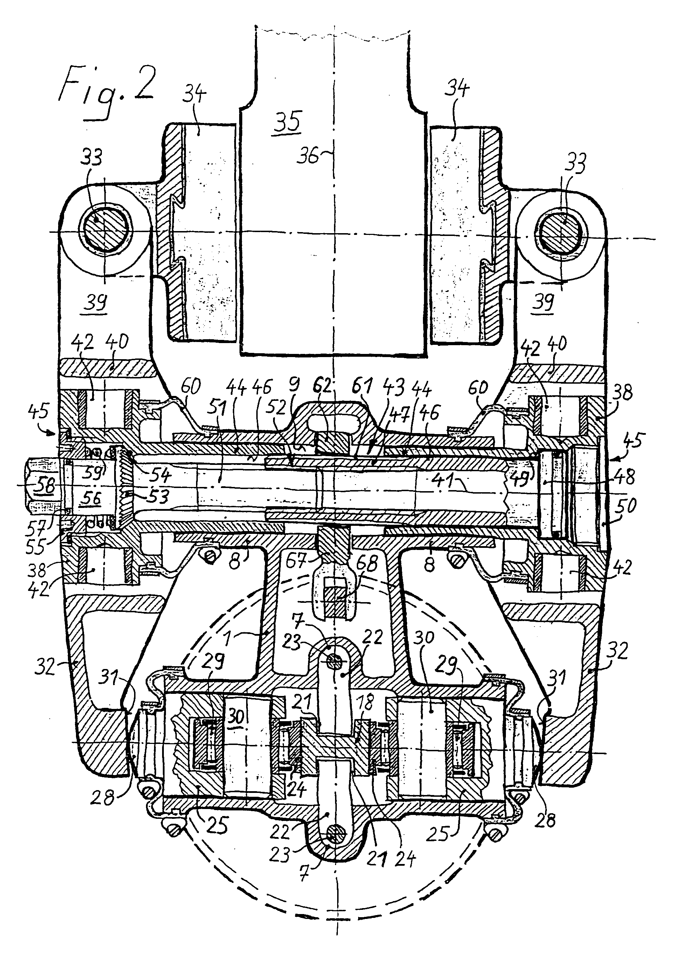

Aus Figur 2 ist nochmals die vorbeschriebene Anordnung gut erkennbar: Es sind die mittels der Schrauben 23 in den Haltenuten 7 gehalterten Führungsfedern 22 und deren verschieblicher Eingriff in die Längsnuten 21 des Keilstückes 18 erkennbar. Weiterhin ist in Figur 2 dargestellt, daß die Rollen 24 mittels Wälzlagerungen 29 und Bolzen 30 in den Gabelenden der Druckstößel 25 gelagert sind; es kann besonders zweckmäßig sein, wenn die Außenringe der als Rollenlagerung ausgebildeten Wälzlagerungen 29 zugleich die Rollen 24 bilden.

Aus Figur 2 ist ersichtlich, daß die balligen Druckflächen 28 der Druckstößel 25 an Flächen 31 anliegen, welche sich nahe der Enden zweier Bremshebel 32 befinden und etwa parallel zu deren Längsrichtung verlaufen. die beiden Bremshebel 23 erstrecken sich seitlich des Tragteiles 1 an den Mündungen von dessen Querbohrung 9 vorbei und sind an ihren anderen Enden mittels Bolzen 33 drehbar an je einer Bremsbacke 34 angelenkt. Die wie üblich ausgebildeten Bremsbacken 34 sind beiderseits einer Bremsscheibe 35 an diese andrückbar angeordnet. Die Ebene 36 der Bremsscheibe 35 verläuft senkrecht zur Zeichenebene der Figur 2.

Jeder Bremshebel 32 ist etwa in der Mitte seiner Längserstreckung mittels Bolzen 37, deren einer aus Figur 1 ersichtlich ist, an einem ihm zugeordneten Lagerauge 38 drehbar gelagert. Die Achsrichtung der Bolzen 37 verläuft dabei parallel zur Ebene 36 und rechtwinklig zur Längsrichtung der Bremshebel 32. Die Bremshebel 32 sind jeweils doppelwangig mit zwei Wangen 39 ausgebildet, die durch einen Verbindungssteg 40 versteift sind. Die Lageraugen 38 greifen zwischen die beiden Wangen 39 der Bremshebel 32 ein. In Figur 2 sind die beiden Lageraugen 38 in um 90° um die Achse 41 der Querbohrung 9 gedrehten Lagen dargestellt, so daß ihre Bohrungen 42, welche der Aufnahme der Bolzen 37 dienen, ersichtlich sind.

Die beiden Lageraugen 38 bilden die Enden einer insgesamt als Zugstange 43 bezeichneten Vorrichtung, welche in der Querbohrung 9 des Tragteils 1 längsverschieblich gelagert ist. An die Lageraugen 38 sind auf den einander zugewandten Seiten Hülsenabschnitte 44 angesetzt, mit welchen sie Lagerteile 45 bilden. Die Hülsenabschnitte 44 sind in der Querbohrung 9 verschieblich gelagert, sie enden mit einigem Abstand voreinander nahe der Ebene 36. Die Lagerteile 45 sind mit zur Achse 41 koaxialen Längsbohrungen 46 versehen, welche sich nach außen, im Bereich der Lageraugen 38, gestuft erweitern. In der Längsbohrung 46 des gemäß Figur 2 rechten Lagerteiles 45 befindet sich eine Gewindehülse 47, welche sich mittels eines Kopfteiles 48 entgegen einer Verschieberichtung nach links wirkend an einer ringförmigen Flanschfläche 49 in der Längsbohrung 46 drehbar abstützt. Ein in die Mündung der Längsbohrung 46 eingesetztes Deckelteil 50 verschließt die Längsbohrung 46 des rechten Lagerteiles 45 nach außen. Mit dem Innengewinde der Gewindehülse 47 ist das Außengewinde einer Gewindespindel 51 selbsthemmend verschraubt, wodurch sich eine Schraubverbindung 52 ergibt. Im Bereich des linken Lagerteiles 45 ist die Gewindespindel 51 mit einem verzahnten Konusflansch 53 versehen, dem eine entsprechende Flanschfläche in der Bohrung 46 gegenübersteht, mit welcher zusammen er eine nur durch Aufbringen eines Mindestdrehmomentes lösbare Drehkupplung 54 zwischen dem linken Lagerteil 45 und der Gewindespindel 51 bildet. In die Mündung der Längsbohrung 46 des linken Lagerteiles 45 ist ein Deckelteil 55 eingesetzt, welches eine Bohrung aufweist, die von einem zylindrischen Ansatz 56 der Gewindespindel 51 drehbar durchragt ist. Ein Dichtring 57 dichtet den Ringspalt zwischen dem Deckelteil 55 und dem Ansatz 56 ab. Außerhalb des Lagerauges 38 endet die Gewindespindel 51 mit einem Profilflächen 58 in Form eines Sechskants tragenden Endabschnitt. Zwischen das Deckelteil 55 und eine rückwärtige Flanschfläche des Konusflansches 53 ist eine Feder 59 eingespannt, welche die Drehkupplung 54 in Schließrichtung belastet. Von den Ansätzen 8 des Tragteiles 1 erstrecken sich Schutzbälge 60 zu den Lageraugen 38 und schützen so die Ringspalte zwischen der Querbohrung 9 und den Hülsenabschnitten 44.

Der Außenumfang der Gewindehülse 47 ist beidseitig der Ebene 36 in einer etwa der Verschraubungslänge der Schraubenverbindung 52 entsprechenden Lange mit einer axialen Sperrverzahnung 61 versehen. Im Bereich der Sperrverzahnung 61 ist die Gewindehülse 47 von einem axialverschieblich und drehbar auf ihr gelagerten Ringteil 62 umschlossen. Am Ringteil 62 ist, wie besonders deutlich aus Figur 5 erkennbar, eine Sperrklinke 63 um einen Bolzen 64 drehbar gelagert; eine Feder 65 ist derart zwischen die Sperrklinke 63 und eine Abstützfläche am Ringteil 62 eingespannt, daß die Sperrklinke 63 federnd in die Sperrverzahnung 61 einrastet. Die Anordnung ist derart getroffen, daß die Sperrklinke 63 mit der Sperrverzahnung 61 ein als Einwegdrehkupplung wirkendes Ratschengetriebe 66 zwischen dem Ringteil 62 und der Gewindehülse 47 bildet. Wie auch aus Figur 3 ersichtlich kragt vom Ringteil 62 in Richtung zur Achse 26 des Bremszylinders 3 ein Dreharm 67 aus, dessen kopfartig ausgebildetes, freies Ende gegabelt ausgebildet ist und eine Stange 68 beidseitig umgreift. Die Stange 68 verläuft parallel zur Achse 26 zwischen dieser und der Zugstange 43, sie ist axial verschieblich im Tragteil 1 gelagert. Beidseitig des Kopfteil es des Dreharmes 67 ist die Stange 68 mit Anschlägen 69 versehen, welche mit dem erwähnten Kopfteil des Dreharmes 67 zusammenwirken. Einerseits greift die Stange 68 in den Inneraum des Zylinderkörpers 12 ein und endet in einem Sollabstand a vor einem am Kolben 13 gehaltenen Widerlager 70; die Stange 68 bildet zusammen mit dem Widerlager 70 eine den Leerhub a aufweisende Anschlagvorrichtung 71. Der der Anschlagvorrichtung 71 zugewandte Anschlag 69 liegt an einem Anschlag 72 des Tragteiles 1 an und hindert so die Stange 68 an einer weiteren Verschiebung in Richtung zum Kolben 13. Zwischen einen Federteller 73 am andersseitigen Anschlag 69 und das Tragteil 1 ist eine die Stange 68 umgebende Feder 74 eingespannt, die Feder 74 belastet die Stange 68 in Verschieberichtung zum Kolben 13. Das dem Kolben 13 abgewandte Ende der Stange 68 ist in einer Sackbohrung 75 des Tragteiles 1 verschieblich geführt.

Die Öffnung 4 bzw. Ausnehmung 6 und ein erweiterter Abschnitt innerhalb der Querbohrung 9 sind an ihren tiefsten Stellen im Tragteil 1 durch Öffnungen 76 miteinander verbunden, wie aus Figur 3 ersichtlich ist. An der tiefsten Stelle des so gebildeten Innenhohlraumes im Tragteil 1 ist dessen Wandung von einer Entwässerungsschraube 77 durchsetzt, deren Bohrungen 78 den Innenraum mit der Atmosphäre verbinden. Durch die Bohrungen 78 kann sich im Innenraum ansammelndes Kondensat abfließen. Die äußeren Mündungen der Bohrungen 78 sind durch eine Schutzhaube 79 abgedeckt und vor dem Eindringen von Fremdkörpern geschützt.

Im Lösezustand der Bremseinheit ist der Beaufschlagungsraum 14 drucklos, der Kolben 13 befindet sich unter der Kraft der Feder 16 in seiner oberen Stellung, die Rollen 24 liegen am unteren Abschnitt des Keilstückes 18 an dessen Keilflächen 19 an und die Bremsbacken 34 befinden sich in geringem Abstand vor den Reibflächen der Bremsscheibe 35. Die Teile der Bremseinheit nehmen die aus den Figuren 1 bis 5 ersichtlichen Lagen ein.

Zum Bremsen wird der Beaufschlagungsraum 14 durch den Rohranschluß 15 mit Druckluft beaufschlagt, so daß sich der Kolben 13 gemäß Figur 3 und 4 entgegen der Kraft der Druckfeder 16 absenkt und vermittels des Keilstückes 18 über die Rollen 24 die Druckstößel 25 auseinanderspreizt. Über die Druckflächen 28 werden die die Flächen 31 aufweisenden Enden der Bremshebel 32 auseinandergespreizt, die Bremshebel 32 drehen sich um die Bolzen 37 und pressen die Bremsbacken 34 an die Bremsscheibe 35 an. Es sei angenommen, daß das Lüftspiel der Bremse richtig eingestellt ist und der Kolben 13 einen höchstens dem Abstand a entsprechenden Abwärtshub ausführt, so daß die Stange 68 mitsamt dem Ratschengetriebe 66 in Ruhe verbleibt. Die Länge der Zugstange 43 und damit der Abstand der zu ihren beiden Enden befindlichen Bolzen 37 als Drehachsen für die Bremshebel 32 bleibt damit konstant, die Schraubverbindung 52 verbleibt in Ruhe und über die Gewindehülse 47, das Kopfteil 48 und die Flanschfläche 49 wird der gemäß Figur 2 rechte Hülsenabschnitt 44 und über die Gewindespindel 51 sowie die geschlossene Drehkupplung 54 der gemäß Figur 2 linke Hülsenabschnitt 44 festgehalten.

Beim Lösen der Bremse spielen sich entsprechend umgekehrte Vorgänge ab, wobei die Druckfeder 16 den Kolben 13 bei Entlüften des Beaufschlagungsraumes 14 wieder in die Ausgangslage hebt.

Falls, beispielsweise durch Verschleiß der Bremsbacken 34, die Scheibenbremse einen zu großen Lösehub aufweist, muß der Kolben 13 beim Einbremsen bis zum festen Anpressen der Bremsbacken 34 an die Bremsscheibe 35 einen den Sollabstand a übersteigenden Abwärtshub ausführen. Die Anschlagvorrichtung 71 wird somit geschlossen und die Stange 68 vom Kolben 13 um einen dem Überhub über den Sollabstand a entsprechenden Wert entgegen der Kraft der Feder 74 abwärts gedrückt. Über den Anschlag 69 wird dabei der Dreharm 67 gedreht, wobei die Sperrklinke 63 über eine oder mehrere Zähne der Sperrverzahnung 61 überratscht, ohne die gemäß Figur 2 rechte Gewindehülse 47 zu verdrehen. Kehrt beim nachfolgenden Lösen der Bremsen der Kolben 13 in seine obere Endstellung zurück, so folgt die Stange 68 dieser Hubbewegung unter der Kraft der Feder 74, bis der Anschlag 69 am Anschlag 72 (Figur 3) anschlägt. Bei dieser Hubbewegung der Stange 68 wird über den unteren Anschlag 69 der Dreharm 67 in seine Ausgangslage zurückgedreht, wobei die Sperrklinke 63 in der Sperrverzahnung 61 verrastet bleibt und somit die gemäß Figur 2 rechte Gewindehülse 47 mitdreht. Da über die durch die Feder 59 geschlossene Drehkupplung 54 die Gewindespindel 51 drehfest gehalten ist, verschraubt sich hierbei die Gewindehülse 47 in Aufschraubrichtung auf die Gewindepindel 51, die Schraubverbindung 52 wird also verkürzt und über die Flanschfläche 49 einerseits und die Drehkupplung 54 andererseits werden die beiden Hülsenabschnitte 44 einander um einen entsprechenden Betrag angenähert. Es erfolgt somit eine Verkürzung des Abstandes der beidseitigen Bolzen 37 und damit der Drehachsen der Bremshebel 32, wodurch das übermäßige Lösespiel der Scheibenbremse auf den Sollwert verringert wird.

Zum manuellen Justieren des Lösespiels der Scheibenbremse ist mittels eines an die Profilflächen 58 anzusetzenden Schraubenschlüssels die Gewindespindel 51 zu drehen; bei diesem Drehen ist das Haltemoment der verzahnten Drehkupplung 54 zu überwinden, welches sich bei Überschreiten einer bestimmten Drehmomentgrenze entgegen der Kraft der Feder 59 löst und ein Drehen der Gewindespindel unter Durchratschen der Verzahnung der Drehkupplung 54 ermöglicht. Beim Drehen der Gewindespindel 51 verschraubt sich diese in der Gewindehülse 47, wodurch der Abstand der sich an den Enden der Zugstange 43 befindenden Bolzen 37 und damit der Abstand der Bremsbacken 34 ändert.

Nach Figur 1 weisen die Bremsbacken 34 Lagerstellen 80 zum Anlenken von in Figur 1 nicht dargestellten Aufhängependeln auf. Die oberen Enden der Aufhängependel sind wie üblich an einem Rahmenteil des Schienenfahrzeuges anzulenken.

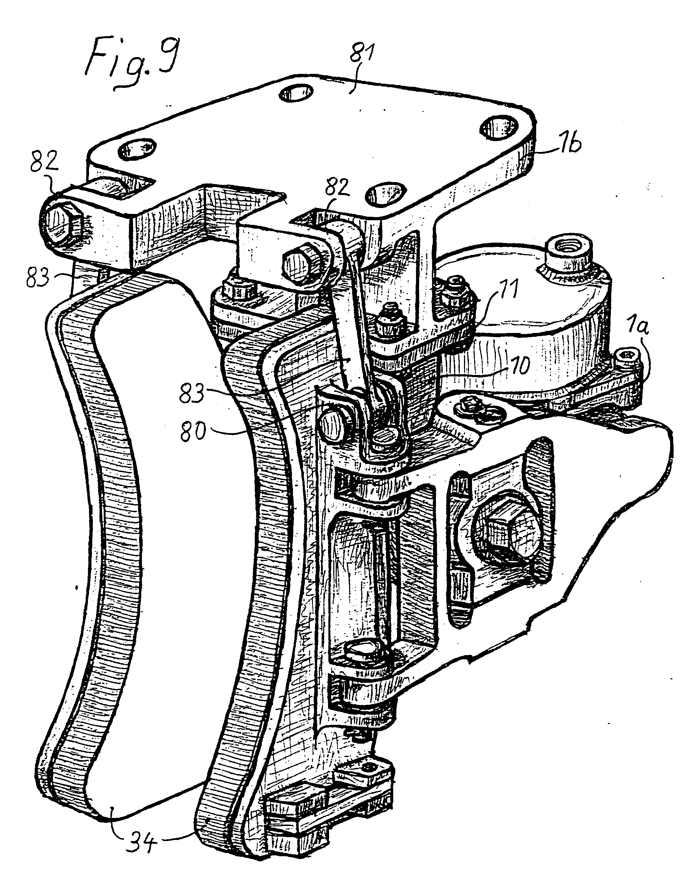

In Abänderung zum dargestellten Ausführungsbeispiel ist es gemäß Figur 9 möglich, das Tragteil zweiteilig, bestehend aus einem unteren Teil 1a und einem oberen Teil 1b, auszuführen. Das untere Teil 1a des Tragteiles entspricht im wesentlichen dem Tragteil 1 nach Figur 6, lediglich die Höhe des Ansatzes 10 ist kürzer gehalten. Mit dem Flanschabschnitt 11 ist gemäß Figur 9 der obere Teil 1b des Tragteiles verschraubt, welcher konsolenartig ausgebildet ist und an seiner Oberseite einen Flanschabschnitt 81 zum lösbaren Anflanschen am Rahmen eines Schienenfahrzeuges aufweist. Vom Flanschabschnitt 81 kragen oberhalb der Bremsbacken 34 Lagerstellen 82 aus, an welchen die oberen Enden von sich im wesentlichen abwärts erstreckenden Pendelhebel 83 angelenkt sind. Die unteren Enden der Pendelhebel 83 sind an den Lagerstellen 80 der Bremsbacken 34 angelenkt. Zur Montage der Bremseinheit nach Figur 9 ist also lediglich deren Flanschabschnitt 81 am nicht dargestellten Fahrzeugrahmen anzuflanschen, es müssen keine Lagerstellen für die oberen Enden der Pendelhebel 83 am Fahrzeugrahmen vorgesehen werden. Hierdurch wird, bezogen auf die Ausführung nach Figur 1, die Montage der Bremseinheit am Schienenfahrzeug vereinfacht und zugleich deren Maßhaltigkeit insbesondere hinsichtlich der Anlenkstellen für die Pendelhebel 83 gewährleistet. Im übrigen entspricht der Aufbau der Bremseinheit nach Figur 9 dem vorstehend beschriebenen Ausführungsbeispiel.

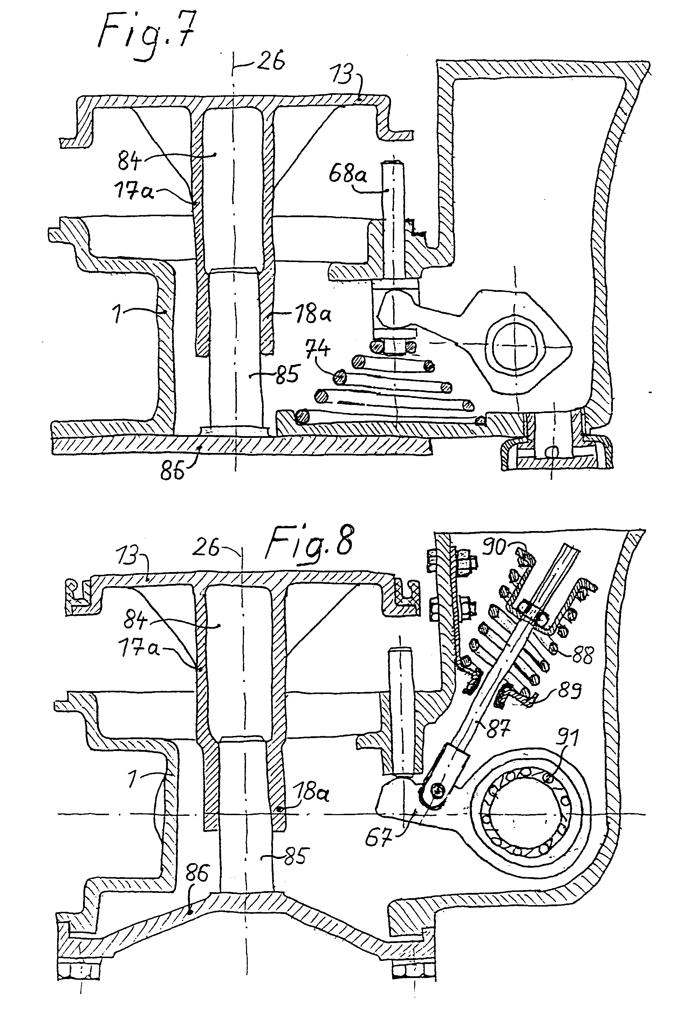

In Abänderung zu den vorstehend beschriebenen Ausführungsbeispielen kann es gemäß Figur 7 und 8 zweckmäßig sein, das Keilstück 18a und auch die Kolbenstange 17a mit einer zur Achse 26 koaxialen Längsbohrung 84 zu versehen. In der Längsbohrung 84 ist axialverschieblich ein Führungsbolzen 85 geführt, welcher starr an der unteren Wandung 86 des Tragteiles 1 befestigt ist. Der Abstand von der Wandung 86 zum unteren Ende des Keilstückes 18a kann von einem den Führungsbolzen 85 mit Spiel umgebenden, nicht dargestellten Faltenbalg zum Schutz der Schiebeführung überbrückt sein. Bei dieser Ausbildung erübrigt sich eine Führung des Keilstückes 18a durch Führungsfedern 22, die in Haltenuten 7 und Längsnuten 21 eingreifen, wie es für das eingangs beschriebene Ausführungsbeispiel erwähnt ist.

Weiterhin wurde bei der Ausführung nach Figur 7 auf eine Führung des unteren Endes der Stange 68a in einer Sackbohrung 75 des Tragteiles 1 verzichtet, die Feder 74 wurde als Kegelfeder ausgebildet. Hierdurch ergibt sich eine einfachere und billigere Konstruktion.

In weiterer Abänderung ist es gemäß Figur 8 möglich, unter Entfall der Feder 74 am Dreharm 67 einen sich schräg aufwärts erstreckenden Zuganker 87 anzulenken, welcher über eine Feder 88 gegen ein mit dem Tragteil 1 verbundenes Widerlager 89 abgestützt ist. Dabei kann es zweckmäßig sein, einen Federteller 90 für die Feder 88 über eine Verschraubung justierbar am Zuganker 87 anzubringen; damit ist das während Nachstellvorgängen vom Dreharm 67 auf die Gewindehülse 47 aufgebrachte Drehmoment justierbar.

In weiterer Abänderung ist es gemäß Figur 8 möglich, das Ratschengetriebe 66 durch einen Freilauf 91 zu ersetzen, welcher nur in einer Drehrichtung sperrt.

In weiterer Abänderung ist es natürlich möglich, die Zuordnung des Ratschengetriebes 66 bzw. der Freilaufkupplung 91 sowie der Handverstellung mittels der Profilflächen 58 zu der Gewindehülse 47 bzw. der Gewindespindel 51 zu vertauschen. Weiterhin ist es möglich, das Ratschengetriebe bzw. den Freilauf, allgemein ausgedrückt die Einwegdrehkupplung willkürlich lösbar auszubilden und das mit dieser Einwegdrehkupplung gekoppelte Teil der Schraubverbindung mit Vorrichtungen zum willkürlichen Verdrehen, wie beispielsweise den Profilflächen 58, zu versehen; das andere Teil der Schraubverbindung kann dann fest mit dem ihm zugeordneten Lagerteil 45 bzw. Hülsenabschnitt 44 verbunden sein.

In weiterer Abänderung ist es möglich, den Bremszylinder 3 durch ein andersartiges Antriebsmodul, beispielsweise eine hydraulische oder elektrische Antriebsvorrichtung zu ersetzen. Weiterhin kann auch ein Federspeicherzylinder vorgesehen sein. Alle diese Antriebsvorrichtungen können durch die Betriebsbremse betreibbar ausgebildet sein, es ist jedoch auch möglich, sie mit jeweils einer anderen Antriebsvorrichtung zu kombinieren, wobei dann die eine weiterhin der Betriebsbremse, die andere der Feststellbremse zuzuordnen ist. Insbesondere ist es möglich, Zylinderkombinationen gemäß der eingangs erwähnten EP-A 132 600 vorzusehen.

Schließlich ist es möglich, die den Bremsbacken 34 abgewandten Enden der Bremshebel 32 mit nicht dargestellten, hakenartigen Fortsätzen zu versehen, in welche eine ebenfalls nicht dargestellte Zugfeder eingehängt ist. Die Zugfeder dient als Lösefeder, sie bringt bzw. halt im gelösten Zustand die Bremshebel 32 in die aus Figur 2 ersichtlichen Lagen. Falls ein Federspeicherbremszylinder vorgesehen ist, kann in die Fortsätze anstelle der Feder bzw. zusätzlich zu dieser eine Notlösevorrichtung eingehängt werden, welche bei Betätigung Zugkräfte ausübt. Die Notlöseeinrichtung kann als ein durch eine Hand- oder Fußpumpe mit einem vorzugsweise hydraulischem Druckmittel beaufschlagbarer Zugzylinder, als durch manuelles Drehen verkürzbares Spannschloß oder dergleichen ausgeführt sein.

**Bezugszeichenliste**

| | |
|---|---|
| 1 | Tragteil |
| 1a | Teil |
| 1b | Teil |
| 2 | Flanschabschnitt |
| 3 | Bremszylinder |
| 4 | Öffnung |
| 5 | Ausnehmung |
| 6 | Ausnehmung |
| 7 | Haltenut |
| 8 | Ansatz |
| 9 | Querbohrung |
| 10 | Ansatz |
| 11 | Flanscchabschnitt |
| 12 | Zylinderkörper |
| 13 | Kolben |
| 14 | Beaufschlagungsraum |
| 15 | Bohranschluß |
| 16 | Druckfeder |
| 16a | Ringflansch |
| 17 | Kolbenstange |
| 17a | Kolbenstange |
| 18 | Keilstück |
| 18a | Keilstück |
| 19 | Keilfläche |
| 20 | Seitenfläche |
| 21 | Längsnut |
| 22 | Führungsfeder |
| 23 | Schraube |
| 24 | Rolle |
| 25 | Druckstößel |
| 26 | Achse |
| 27 | Faltenbalg |
| 28 | Druckfläche |
| 29 | Wälzlagerung |
| 30 | Bolzen |
| 31 | Fläche |
| 32 | Bremshebel |
| 33 | Bolzen |
| 34 | Bremsbacke |
| 35 | Bremsscheibe |
| 36 | Ebene |
| 37 | Bolzen |
| 38 | Lagerauge |
| 39 | Wange |
| 40 | Steg |
| 41 | Achse |
| 42 | Bohrung |
| 43 | Zugstange |
| 44 | Hülsenabschnitt |
| 45 | Lagerteil |
| 46 | Längsbohrung |
| 47 | Gewindehülse |
| 48 | Kopfteil |
| 49 | Flanschfläche |
| 50 | Deckelteil |
| 51 | Gewindespindel |
| 52 | Schraubverbindung |
| 53 | Konusflansch |
| 54 | Drehkupplung |
| 55 | Deckelteil |
| 56 | Ansatz |
| 57 | Dichtring |
| 58 | Profilfläche |
| 59 | Feder |
| 60 | Schutzbalg |
| 61 | Sperrverzahnung |
| 62 | Ringteil |
| 63 | Sperrklinke |
| 64 | Bolzen |
| 65 | Feder |
| 66 | Ratschengetriebe |
| 67 | Dreharm |
| 68 | Stange |
| 68a | Stange |
| 69 | Anschlag |
| 70 | Widerlager |
| 71 | Anschlagvorrichtung |
| 72 | Anschlag |
| 73 | Federteller |
| 74 | Feder |
| 75 | Sackbohrung |
| 76 | Öffnung |
| 77 | Entwässerungsschaube |
| 78 | Bohrungen |
| 79 | Schutzhaube |
| 80 | Lagerstelle |
| 81 | Flanschabschnitt |
| 82 | Lagerstelle |
| 83 | Pendelhebel |
| 84 | Längsbohrung |
| 85 | Führungsbolzen |
| 86 | Wandung |
| 87 | Zuganker |
| 88 | Feder |
| 89 | Widerlager |
| 90 | Federteller |
| 91 | Freilauf |

**Patentansprüche**

1.  Bremseinheit für Scheibenbremsen von Schienenfahrzeugen, mit einem an einem Rahmenteil des Schienenfahrzeuges befestigbaren Tragteil (1), welches mit einem Bremszylinder (3) kombiniert ist, dessen Achse (26) in der Ebene (36) der abzubremsenden Bremsscheibe (35) verläuft und dessen Kolbenstange (17) ein beidseitig mit Keilflächen (19) versehenes Keilstück (18) trägt, mit einer Bremszange, welche zwei Bremshebel (32) aufweist, die an ihren einen Enden je eine an die Bremsscheibe (35) anpreßbare Bremsbacke (34) tragen, zwischen deren andere Enden das Keilstück (18) eingreift, wobei an jeder Keilfläche (19) eine in Spreizrichtung der Bremshebelenden mit einem dieser Bremshebelenden zusammenwirkende Rolle (24) abrollbar ist, und mit einer die Bremshebel (32) etwa mittig verbindenden Zugstange (43), welche in ihrer parallel zur Achsrichtung der Bremsscheibe (35) verlaufenden Längsrichtung verschieblich im Tragteil (1) gelagert ist, welche zwei durch eine selbsthemmende Schraubverbindung (52) zumindest in Zugrichtung gegeneinander abgestützte Lagerteile (45) umfaßt, deren jedes ein zwischen die beiden Wangen (39) eines der doppelwangig ausgebildeten Bremshebel (32) eingreifendes Lagerauge (38) aufweist, das um eine zur Ebene (36) der Bremsscheibe (35) parallele Drehachse drehbar am jeweiligen Bremshebel (32)gelagert ist, und mit einer hubabhängig vom Bremszylinder (3) betätigbaren Betätigungsvorrichtung für die Schraubverbindung (52), umfassend eine mit einem einem Sollhub des Keilstückes (18) entsprechenden Leerhub (a) versehene Anschlagvorrichtung (71) zwischen einem entsprechend der Hubbewegung des Keilstückes (18) beweglichen Teil und einer Hebelanordnung, die über eine gegebenenfalls als Ratschengetriebe (66) ausgebildete Einwegdrehkupplung mit einem drehbaren Teil der Schraubverbindung (52) gekoppelt ist, wobei die Einwegdrehkupplung eine Ruhestellung aufweist, aus welcher sie durch die Hebelanordnung entgegen der Kraft einer Feder (74, 88) in Entsperrdrehrichtung drehbar ist, und wobei die Richtung der Achse (26) des Bremszylinders (3) etwa rechtwinklig zur Längsrichtung der Bremshebel (32) verläuft, gekennzeichnet durch die Kombination der zum Teil an sich bekannten Merkmale, daß
    - die Rollen (24) an je einem von beidseitig des Keilstückes (18) angeordneten Druckstößeln (25) drehbar gelagert sind, wobei die Druckstößel (25) unverdrehbar und parallel zur Achse der Bremsscheibe (35) verschieblich im Tragteil (1) gelagert sind und über endseitige Druckflächen (28) an den Bremshebelenden (32) anliegen;
    - die Lagerteile (45) einander zugewendet in Längsrichtung der Zugstange (43) verlaufende Hülsenabschnitte (44) aufweisen, die längsverschieblich in einer Querbohrung (9) des Tragteils (1) gelagert sind;
    - die eine Gewindehülse (47) und eine mit dieser verschraubte Gewindespindel (51) aufweisende Schraubverbindung (52) die Hülsenabschnitte (44) durchgreift, wobei jeweils zumindest in Zugrichtung der Zugstange (43) wirksam die Gewindehülse (47) am einen und die Gewindespindel (51) am anderen Lagerteil (45) abgestützt ist, wenigstens eine dieser Abstützungen drehbar ausgebildet und das so drehbare Teil - Gewindehülse (47) oder Gewindespindel - mit der Einwegdrehkupplung (66) gekoppelt ist.

2.  Bremseinheit nach Anspruch 1, dadurch gekennzeichnet, daß sowohl die Gewindespindel (51) wie auch die Gewindehülse (47) drehbar gelagert sind, wobei das zur Einwegdrehkupplung (66) ungekoppelte Teil - Gewindespindel (51) oder Gewindehülse - eine nur durch Aufbringen eines Mindestdrehmomentes lösbare Drehkupplung (54) zum es aufnehmenden Lagerteil (45) und Profilflächen (58) zu seiner manuellen Drehung aufweist.

3.  Bremseinheit nach Anspruch 2, dadurch gekennzeichnet, daß zwischen das Teil - Gewindespindel (51) oder Gewindehülse - und das es aufnehmende Lagerteil (45) eine verzahnte, in Schließrichtung von einer Feder (59) belastete Konuskupplung (53, 54) eingeordnet ist, die in Bewegungsrichtung des Teiles (51) zur Ebene (36) der Bremsscheibe (35) hin schließend ausgebildet ist.

4.  Bremseinheit nach Anspruch 1, dadurch gekennzeichnet, daß das Keilstück (18) an seinen Seitenflächen (20) Längsnuten (21) trägt und in einer Ausnehmung (6) des Tragteiles (1) beweglich ist, daß die Ausnehmung (6) den Längsnuten (21) gegenüberliegende Haltenuten (7) aufweist und daß in den Haltenuten (7) Führungsfedern (22) gehaltert sind, die längsverschieblich in die Längsnuten (21) eingreifen.

5.  Bremseinheit nach Anspruch 1, dadurch gekennzeichnet, daß das Keilstück (18) eine nutfederartig ausgebildete, verdrehsichere Längs-

führung (21, 22) zum Tragteil (1) aufweist.

6.  Bremseinheit nach Anspruch 1, dadurch gekennzeichnet, daß das Keilstück (18a) eine zur Achse (26) des Bremszylinders (3) koaxiale Längsbohrung (84) aufweist, in welche ein starr mit dem Tragteil (1) verbundener Führungsbolzen (85) verschieblich eingreift (Fig. 7; 8).

7.  Bremseinheit nach Anspruch 1, dadurch gekennzeichnet, daß die endseitigen Druckflächen (28) der Druckstößel (25) und/oder die mit diesen zusammenwirkenden Flächen der Bremshebelenden ballig ausgebildet sind.

8.  Bremseinheit nach Anspruch 1, dadurch gekennzeichnet, daß die Druckstößel (25) einen rechteckigen Querschnitt aufweisen und in längsnutenartigen Ausnehmungen (5) des Tragteiles (1) längsverschieblich geführt sind.

9.  Bremseinheit nach Anspruch 1, dadurch gekennzeichnet, daß die Anschlagvorrichtung (71) zwischen dem Kolben (13) des Bremszylinders (3) und einer parallel zur Achse (26) des Bremszylinders (3) längsverschieblich im Tragteil (1) gelagerten Stange (68) angeordnet ist, daß die Stange (68) in Verschieberichtung zum Kolben (3) von einer Ferder (74) belastet und durch einen Anschlag (72) am Tragteil (1) abgefangen ist und daß mit der Stange (68) das Ende eines zu dieser etwa rechtwinklig verlaufenden Dreharmes (67) gekoppelt ist, dessen anderes Ende ein auf dem mit der Einwegkupplung (66) gekoppelten Teil - Gewindehülse (46) oder Gewindespindel - gelagertes Ringteil (62) trägt.

10. Bremseinheit nach den Ansprüchen 3 und 9, wobei die Einwegdrehkupplung als Ratschengetriebe (66) ausgebildet ist, dadurch gekennzeichnet, daß das Ringteil (62) axialverschieblich auf dem mit der Einwegkupplung gekoppelten Teil (46) gelagert ist und eine federnd in eine Sperrverzahnung (61) des Teiles (46) eingreifende Sperrklinke (63) aufweist und daß die Sperrverzahnung (61) eine etwa dem Verschraubungshub der Schraubverbindung (52) entsprechende, axiale Länge besitzt.

11. Bremseinheit nach Anspruch 9, dadurch gekennzeichnet, daß das stangenseitige Ende des Dreharmes (67) gegabelt ist und die Stange (68) beidseitig umgreift und daß die Stange (68) beidseitig dieses Endes des Dreharmes (67) mit diesem zusammenwirkende Anschläge (69) trägt.

12. Bremseinheit nach Anspruch 1, dadurch gekennzeichnet, daß die Bremshebel an den druckflächenseitigen Enden hakenartige Fortsätze aufweisen, in welche eine die beiden Bremshebelenden verbindende Zugfeder eingehängt ist.

13. Bremseinheit nach Anspruch 12, wobei der Bremszylinder zumindest ein Federspeicherteil aufweist, gegebenenfalls als Federspeicherbremszylinder ausgebildet ist, dadurch gekennzeichnet, daß in die hakenartigen Fortsätze anstelle der Zugfeder eine bei manueller Betätigung Zugkräfte ausübende Notlösevorrichtung, wie ein durch eine Hand- oder Fußpumpe mit einem hydraulischen Druckmittel beaufschlagbarer Zugzylinder, ein durch manuelles Drehen verkürzbares Spannschloß oder dergleichen, einhängbar ist.

14. Bremseinheit nach Ansprüchen 1 und 8, dadurch gekennzeichnet, daß das Tragteil (1) zweiteilig ausgebildet ist, wobei ein unterer Teil (1a) den Bremszylinder (3) trägt und die längsnutenartigen Ausnehmungen (5) zur Führung der Druckstößel (25) sowie die Querbohrung (9) zur Lagerung der Hülsenabschnitte (44) der Lagerteile (45) aufweist, ein oberes Teil (1b) konsolenartig ausgebildet ist, an seiner Oberseite einen Flanschabschnitt (81) zum lösbaren Anflanschen an einem Rahmenteil des Schienenfahrzeuges aufweist und etwa in Höhe seines Flanschabschnittes (81) mit Lagerstellen (82) für die oberen Enden von sich im wesentlichen abwärts erstreckenden, an ihren unteren Enden an den Bremsbacken (34) angelenkten Pendelhebeln (83) versehen ist, und wobei die beiden Teile (1a, 1b) des Tragteiles (1) durch eine lösbare, flanschartige Verbindung miteinander verbunden sind.

## Claims

1.  Brake unit for disc brakes of rail vehicles with a supporting part (1) attachable to a frame part of the rail vehicle that is combined with a brake cylinder (3) whose axis (26) runs on the level (36) of the brake disc (35) to be braked and whose piston rod (17) supports a wedge part (18) that is provided on either side with wedge-shaped surfaces (19) with brake calipers featuring two brake levers (32) which on one of their ends bear a brake shoe (34) each that can be applied to the brake disc (35), between whose other ends the wedge part (18) engages, with a roller (24) cooperating on either wedge-shaped surface (19) in expansion direction of the brake lever ends with one of these brake lever ends being able to run and with a connecting rod (43) linking about centrically the brake levers (32) that is mounted moveably in the supporting part (1) in its longitudinal direction running parallel to the axial direction of the brake disc (35) that comprises two bearing elements (45) supported one in relation to the other at least in tractive direction by a self-locking screw fitting (52) featuring each a bearing eye (38) engaging between both cheeks (39) of a brake lever (32) of the double cheek type bearing on the respective brake lever (32) in a rotatable way around a rotation axis that runs parallel to the plane (36) of the brake disc (35) and with an actuating device for the screw fitting (52) that is operable by the brake cylinder (3) as a function of the stroke, comprising a stop device (71) provided with an idle stroke (a) corresponding to a nominal stroke of the wedge part (18) between a moveable part corresponding to the stroke of the wedge part (18) and a lever arrangement coupled as required via a one-way rotary coupler designed as a ratchet gear (66) to a rotatable part of the screw fitting (52), with the one-way rotary coupler featuring a rest position from which it may be rotated by the lever arrangement against the force of a spring (74, 88) in the rotation unlocking direction and with the direction of the axis (26) of the brake cylinder (3) running approximately at right angles to the longitudinal direction of the brake levers (32), characterized by the combination of the features that are actually known in part, that

- the rollers (24) are bearing rotatably on one of the tappets (25) respectively arranged on either side of the wedge part (18), whereby the tappets (25) are mounted moveably on the supporting part (1) in a rotationally locked way and parallel to the axis of the brake disc (35) and are applied to the brake lever ends (32) via end side pressure areas (28);
- the bearing parts (45) that are turned towards each other are featuring sleeve sections (44) running in longitudinal direction of the connecting rod (43) mounted in a longitudinally displaceable way in a cross bore (9) of the supporting part (1);
- a screw fitting (52) featuring one tapped bush (47) and one threaded spindle (51) screwed into the latter reaches through the bush sections (44), whereby at least in tractive direction of the connecting rod (43) the tapped bush (47) is effectively supported on one bearing part (45) and the threaded spindle on the other, and at least one of these supporting elements is designed as a rotatable part and the thus rotatable part - tapped sleeve (47) or threaded spindle - is coupled to the one-way rotary coupler (66).

2. Brake unit according to claim 1, wherein both the threaded spindle (51) and the tapped bush (47) are rotatably mounted, whereby the part that is uncoupled in relation to the one-way rotary coupler (66) - the threaded spindle (51) or the tapped sleeve - features a rotary coupler (54) that is only able to be released by applying a minimum torque to the bearing element (45) accommodating it as well as profile surfaces (58) for its manual rotation.

3. Brake unit according to claim 2, wherein a toothed cone clutch (53, 54) loaded in the closing direction of a spring (59) is arranged between the part - threaded spindle (51) or tapped sleeve - and the bearing element (45) accommodating it, said clutch being designed to close in the moving direction of part (51) in relation to the plane (36) of the brake disc (35).

4. Brake unit according to claim 1, wherein the wedge part (18) bears longitudinal grooves (21) on its side surfaces (20) and is located in a moveable way in a recess (6) of the bearing element (1), and wherein the recess (6) shows retaining grooves (7) located opposite the longitudinal grooves (21) and guide springs (22) are fixed in the retaining grooves (7) that engage the longitudinal grooves (21) in a longitudinally displaceable way.

5. Brake unit according to claim 1, wherein the wedge part (18) features a longitudinal guide (21, 22) of groove and tongue-like design that is torsionally rigid in relation to the supporting part (1).

6. Brake unit according to claim 1, wherein the wedge part (18a) features a coaxial longitudinal bore (84) in relation to the axis (26) of the brake cylinder (3), in which a guide bolt (85) that is rigidly connected to the supporting part (1) engages in a displaceable way (Fig. 7; 8).

7. Brake unit according to claim 1, wherein the end side pressure areas (28) of the tappets (25) and/or the surfaces of the brake lever ends cooperating with them are of spherical design.

8. Brake unit according to claim 1, wherein the tappets (25) feature a rectangular cross section and are guided in longitudinal groove-like recesses (5) of the supporting part (1) in a longitudinally displaceable way.

9. Brake unit according to claim 1, wherein the stop device (71) is arranged between the piston (13) of the brake cylinder (3) and a rod (68) mounted in parallel to the axis (26) of the brake cylinder (3) in a longitudinally displaceable way in the supporting part (1), the rod (68) being loaded by a spring (74) in displacement direction towards the piston (3) and being arrested by a stop (72) on the supporting part (1) and the rod (68) being coupled to the end of a rotary arm (67) running approximately at right angles to the latter and whose other end bears an annular element (62) on the part coupled to the one-way coupler (66) - tapped bush (46) or threaded spindle -.

10. Brake unit according to claims 3 and 9, whereby the one-way rotary coupler is designed as a ratchet gear (66), wherein the annular element (62) is mounted in an axially displaceable way on part (46) coupled to the one-way coupler and features a detent pawl (63) which resiliently engages a ratchet wheel (61) of part (46) and the ratchet wheel (61) has an axial length that approximately corresponds to the screwing stroke of the screw fitting (52).

11. Brake unit according to claim 9, wherein the rod side end of the rotary arm (67) is forked and encompasses the rod (68) on either side and the rod (68) is bearing stops (69) on either side of this end of the rotary arm (67) that cooperate with the latter.

12. Brake unit according to claim 1, wherein the brake levers show hook-like extensions at the ends of the pressure area side, in which a tension spring connecting both brake lever ends is suspended.

13. Brake unit according to claim 12, with the brake cylinder featuring at least one spring-loaded portion that is possibly designed as a spring-loaded brake cylinder, wherein an emergency brake device that exerts traction forces in case of manual actuation may be hung into the hook-like extensions instead of the tension spring like a traction cylinder that can be pressurized with a hydraulic medium, by means of a hand or foot pump, a turnbuckle that can be shortened by manual rotation or the like.

14. Brake unit according to claims 1 and 8, wherein the supporting part (1) is of bipartite design, whereby a lower portion (1a) supports the brake cylinder (3) and features the longitudinal groove-like recesses (5) for guiding the tappets (25) as well as the cross bore (9) for mounting the bush sections (44) of the mounting parts (45), an upper portion (1b) of console-like design features on its upper side a flange section (81) for detachable flanging to a frame part of the rail vehicle and is provided approximately at the level of its flange section (81) with bearing places (82) for the upper ends of pendulum levers (83) that are essentially extending in downward direction and articulated at their lower ends to the brake shoes (34) and both portions (1a, 1b) of the supporting part (1) being interconnected by a detachable flange-like connection.

**Revendications**

1. Unité de frein pour des freins à disques de véhicules sur rails, avec un élément de support (1) susceptible d'être fixé à un élément du châssis du véhicule sur rails, et qui est combiné avec un cylindre de frein (3) dont l'axe (26) s'étend dans le plan (36) du disque de frein (35) à freiner et dont la tige de piston (17) porte une pièce cunéiforme (18) présentant sur ses deux côtés des surfaces obliques (19), avec une pince de frein comportant deux leviers de frein (32) portant à l'une de leurs extrémités respectivement une plaquette de frein (34) susceptible d'être appliquée contre le disque de frein (35) et entre les extrémités desquels pénètre la pièce cunéiforme (18), sur chaque surface oblique (19) pouvant rouler, dans le sens de l'écartement des extrémités des leviers de frein, un galet (24) qui coagit avec l'une de ces extrémités des leviers de frein, et avec une tige de traction (43) qui relie sensiblement, en position médiane, les leviers de frein, et qui est montée à coulissement dans l'élément (1) de support suivant sa direction longitudinale qui est parallèle à la direction axiale du disque de frein (35), et qui comporte des éléments de montage (45) en appui mutuel, au moins dans la direction de la traction, par l'intermédiaire d'une liaison par vissage (52) autobloquante, et dont chacun présente un oeillet de montage (38) qui pénètre entre les deux joues (39) de l'un des leviers de frein réalisés à double paroi et qui est monté sur le levier de frein concerné (32) de manière à pouvoir tourner autour d'un axe de rotation qui est parallèle au plan (36) du disque de frein (36), et avec un dispositif de commande pour la liaison par vissage (52), susceptible d'être actionné, en fonction de la course, par le cylindre de frein (3), et comprenant un dispositif à butée (71) à course à vide (a) qui correspond à une course de consigne de la pièce cunéiforme (18), et qui est agencé entre une pièce mobile en fonction de la course de la pièce cunéiforme (18) et un dispositif à levier qui est accouplé avec un élément tournant de la liaison par vissage, par l'intermédiaire d'un embrayage rotatif unidirectionnel, éventuellement réalisé sous la forme d'une transmission à cliquet, ledit embrayage rotatif unidirectionnel présentant une position de repos à partir de laquelle il est susceptible d'être amené dans le sens de rotation libre, à l'aide du dispositif à levier, à l'encontre de la force d'un ressort (74, 88), et la direction de l'axe (26) du cylindre de frein (3) s'étendant sensiblement suivant un angle droit par rapport à la direction longitudinale des leviers de frein (32), caractérisée par la combinaison des moyens partiellement connus en soi, et consistant en ce que :

- les galets (24) sont respectivement montés à rotation sur des poussoirs (25) disposés de part et d'autre de la pièce cunéiforme (18), lesdits poussoirs (25) étant montés, sans pouvoir tourner, à coulissement dans l'élément de support (1) parallèlement à l'axe du disque de frein (35) et portant contre les extrémités des leviers (32), par des surfaces de pression (28) situées côté extrémité ;
- les éléments ou pièces de montage (45), se faisant face, comportant des sections de douille (44) qui s'étendent dans le sens longitudinal de la tige de traction (43), et qui sont montées, à déplacement longitudinal, dans un perçage transversal (9) de l'élément de support (1) ;
- la liaison par vissage (52) qui comporte une douille filetée (47) et une broche filetée (51) vissée avec celle-ci, passe par les sections de douille (44), la réalisation étant telle, qu'avec efficacité au moins dans la direction de traction de la tige de traction (43), la douille filetée (47) porte contre l'un et la broche filetée porte contre l'autre élément de montage (45), alors que l'un de ces appuis est réalisé de façon à pouvoir tourner et que l'élément qui peut ainsi tourner -douille filetée (47) ou broche filetée- est accouplé à l'embrayage unidirectionnel.

2. Unité de frein selon la revendication 1, caractérisée par le fait qu'aussi bien la broche filetée (51) que la douille filetée (47) sont montées de façon à pouvoir tourner, la réalisation étant telle que l'élément -broche filetée (51) ou douille filetée-, non relié à l'embrayage de rotation unidirectionnel (66), comporte pour sa rotation manuelle, un embrayage à rotation (54) désengageable, uniquement par la mise en oeuvre d'un couple minimum, pour l'élément de montage (45) et des surfaces profilées (58) qu'il reçoit.

3. Unité de frein selon la revendication 2, caractérisée par le fait qu'entre l'élément -broche filetée (51) ou douille filetée- et l'élément de montage (45) qui le reçoit, est agencé un embrayage ou accouplement conique denté (53, 54) qui est chargé, dans le sens de la fermeture, par un ressort (59), et qui est réalisé de manière à se fermer dans la direction du déplacement de l'élément (51) en direction du plan (36) du disque de frein (35).

4. Unité de frein selon la revendication 1, caractérisée par le fait que la pièce cunéiforme (18) porte, sur ses faces latérales (20), des gorges longitudinales (21), et qu'elle est mobile dans une ouverture (6) de l'élément de support (1), et que l'ouverture (6) comporte des gorges de retenue (6) qui se situent en face des gorges longitudinales (21), et que dans les gorges de retenue (7) sont maintenus des ressorts de guidage (22) qui pénètrent, en pouvant se déplacer dans le sens longitudinal, dans les gorges longitudinales (21).

5. Unité de frein selon la revendication 1, caractérisée par le fait que la pièce cunéiforme (18) comporte un guidage longitudinal (21, 22) vers l'élément de support (1), lequel guidage longitudinal est réalisé à la manière d'une gorge-ressort et est empêché de tourner.

6. Unité de frein selon la revendication 1, caractérisée par le fait que la pièce cunéiforme (18a) comporte un perçage longitudinal (84), coaxial par rapport à l'axe (26) du cylindre de frein (3), et dans lequel pénètre, avec faculté de s'y déplacer, un boulon de guidage (45) relié rigidement à l'élément de support (1).

7. Unité de frein selon la revendication 1, caractérisée par le fait que les surfaces de pression, situées côté extrémité (28), des poussoirs de pression (25) et/ou les surfaces des extrémités des leviers de frein qui coagissent avec ces surfaces, sont réalisés de façon bombée.

8. Unité de frein selon la revendication 1, caractérisée par le fait que les poussoirs de pression (25) présentent une section transversale rectangulaire et sont guidés, dans le sens longitudinal, dans des ouvertures (5), en forme de gorges, de l'élément de support (1).

9. Unité de frein selon la revendication 1, caractérisée par le fait que le dispositif à butée (71) est disposé entre le piston (13) du cylindre de frein (3) et une tige (68) qui est parallèle à l'axe du cylindre de frein (3) et qui est montée à déplacements longitudinaux dans l'élément de support (1), que la tige (68) est chargée, en direction du déplacement vers le piston (3), par un ressort (74) et qu'elle est arrêtée par une butée (72) prévue sur l'élément de support (1), et qu'avec la tige (68) est accouplée l'extrémité d'un bras articulé (67) qui s'étend à peu près perpendiculairement par rapport à la tige, et dont l'autre extrémité porte un élément annulaire (62) qui est monté sur l'élément - douille filetée (46) ou broche filetée- qui est couplé avec l'embrayage unidirectionnel (66).

10. Unité de frein selon les revendications 3 et 9, du type dans lequel l'embrayage à rotation unidirectionnel est réalisé sous la forme d'une transmission à cliquet (66), caractérisée par le fait que l'élément annulaire (62) est monté, à déplacements axiaux, sur l'élément (46) qui est couplé à l'embrayage unidirectionnel, et comporte un cliquet (63) qui pénètre élastiquement dans la denture de blocage (61) de l'élément (46), et que la denture de verrouillage (61) présente une longueur axiale qui correspond sensiblement à la course de vissage de la liaison par glissage (52).

11. Unité de frein selon la revendication 9, caractérisée par le fait que l'extrémité du bras articulé (67), qui est située du côté de la tige, présente une allure en forme de fourche qui entoure sur les deux côtés la tige (68), et que la tige (68) porte, des deux côtés de cette extrémité du bras articulé (67), des butées (69) qui coopèrent avec ce dernier.

12. Unité de frein selon la revendication 1, caractérisée par le fait que les leviers de frein présentent, au niveau des extrémités situées du côté des surfaces de pression, des appendices en forme de crochet, dans lesquels est accroché un ressort de traction qui relie les deux extrémités des leviers de frein.

13. Unité de frein selon la revendication 12, du type dans lequel le cylindre de frein comprend au moins un élément à ressorts accumulateurs, éventuellement réalisé sous la forme d'un cylindre à ressorts accumulateurs, caractérisée par le fait que dans les appendices en forme de crochet, et à la place du ressort de traction, est susceptible d'être accroché un dispositif de desserrage d'urgence qui exerce, lors de la commande manuelle, des forces de traction, comme par exemple un cylindre de traction qui est susceptible d'être chargé en un milieu hydraulique de pression, susceptible d'être chargé à la main ou à l'aide d'une pompe au pied, ou un tendeur qui est susceptible d'être raccourci par rotation manuelle, ou un dispositif similaire.

14. Unité de frein selon les revendications 1 et 8, caractérisé par le fait que l'élément de support (1) est réalisé en deux parties, un élément inférieur (1a) portant le cylindre de frein (3) et comportant les ouvertures (5), en forme de gorges longitudinales, pour guider les poussoirs de pression (25), ainsi que le perçage transversal (9) pour le montage des sections de douilles (44) des éléments de montage (45), alors qu'une partie supérieure (1b) est réalisée sous la forme d'une console, et comporte sur sa face supérieure une section en forme de flasque (81) pour être bridée, de façon détachable, sur un élément de châssis du véhicule sur rails, et est pourvue, à peu près à la hauteur de sa section en forme de flasque (81), d'emplacements de montage (82) pour les extrémités supérieures de leviers pendulaires (83) qui s'étendent sensiblement vers le bas et qui sont articulés, au niveau de leurs extrémités inférieures, sur les mâchoires de freins (34), les deux éléments (1a, 1b) de l'élément de support (1) étant reliés par une liaison détachable, en forme de flasque.

Fig. 1

Fig.2

Fig.4

Fig.3

16

Fig.5

Fig. 6

Fig.7

Fig.8

Fig.9